# EUROPEAN PATENT APPLICATION

(11) **EP 4 397 556 A1**
(43) Date of publication of application: **10.07.2024**
(21) Application number: 23150785.6
(22) Date of filing: 09.01.2023
(51) Int. Cl.: B60W 30/095, B60W 30/09, B60W 50/14, B60K 35/00, B60W 10/04, B60W 10/18, B60W 10/20, G01S 13/931, G01C 21/36, B60W 50/00

(54) **DRIVING BEHAVIOR MONITORING SYSTEM AND METHOD, COMPUTER PROGRAM ELEMENT AND VEHICLE**

(71) Applicant: Volvo Car Corporation, 405 31 Göteborg (SE)
(72) Inventor: FEI, Zhennan, 40531 Göteborg (SE); ÖDBLOM, Anders, 40531 Göteborg (SE)
(74) Representative: Maiwald GmbH

(57) **Abstract**

The present invention relates to a driving behavior monitoring system (10) for a vehicle (1), a vehicle (1) comprising such driving behavior monitoring system (10), a driving behavior monitoring method and a computer program element for such driving behavior monitoring system.

The driving behavior monitoring system (10) comprises an environment sensor unit (11), a trajectory predicting unit (12), and a control unit (14). The environment sensor unit, the trajectory predicting unit and the control unit are arrangeable in a first vehicle (1). The environment sensor unit is configured to generate driving environment information of the first vehicle. The environment sensor unit is also configured to provide operational information of a second vehicle (2) approaching the first vehicle to the trajectory predicting unit. The trajectory predicting unit is configured to predict a driving path (5) of the second vehicle based on at least the operational information of the second vehicle. The control unit is configured to determine a perceived unsafe area (4) based on a current position of the first vehicle (1) and the predicted driving path (5) of the second vehicle (2).

## Description

### TECHNICAL FIELD

The present disclosure relates to a driving behavior monitoring system for a vehicle, a vehicle comprising such driving behavior monitoring system, a driving behavior monitoring method and a computer program element for such driving behavior monitoring system.

### BACKGROUND ART

With advancements in autonomous driving, the number of road accidents is being or will be significantly reduced by vehicles equipped with automated driving (AD) or advanced driver-assistance system (ADAS) capabilities and features. However, people are still cautious about safety perceived when using these features. One of the reasons is that while the planned and calculated trajectories are safe, particularly when it comes to avoiding collision, they are not always consistent with what experienced drivers usually do.

### SUMMARY

Hence, there may be a need to provide an improved driving behavior monitoring system, which increases user's safety perception.

The problem is at least partially solved or alleviated by the subject matter of the independent claims of the present disclosure, wherein further examples are incorporated in the dependent claims. It should be noted that the aspects of the disclosure described in the following apply to the driving behavior monitoring system for a vehicle, the vehicle comprising such driving behavior monitoring system, the driving behavior monitoring method and the computer program element for such driving behavior monitoring system.

According to the present disclosure, a driving behavior monitoring system for a vehicle is presented. The driving behavior monitoring system comprises an environment sensor unit, a trajectory predicting unit, and a control unit. The environment sensor unit, the trajectory predicting unit and the control unit are arrangeable in a first vehicle. The environment sensor unit is configured to generate driving environment information of the first vehicle. The environment sensor unit is also configured to provide operational information of a second vehicle approaching the first vehicle to the trajectory predicting unit. The trajectory predicting unit is configured to predict a driving path of the second vehicle based on at least the operational information of the second vehicle. The control unit is configured to determine a perceived unsafe area based on a current position of the first vehicle and the predicted driving path of the second vehicle.

The driving behavior monitoring system according to the present disclose increases user's confidence on safety of a dynamic driving task performed, for instance by automated driving (AD) or advanced driver-assistance system (ADAS). Even though a crash between the first vehicle and the second vehicle is considered not imminent or unlikely, the user may still concern about a potential crash. The driving behavior monitoring system can take proactive actions at an early stage by providing the user with potential unsafe and/or crash information, user's perceived safe experience during driving may be increased.

The driving behavior monitoring system may be arranged in the first vehicle, which may be considered as an ego vehicle. The first vehicle may be propelled by utilizing automated driving (AD) or advanced driver-assistance system (ADAS) functionalities on an urban road, a rural road or a highway.

The environment sensor unit may comprise a plurality of sensor elements such as lidar sensor, radar sensor, ultrasonic sensor, imaging sensor or the like to capture surroundings of the vehicle and generate environmental monitoring data, in other words the driving environment information of the first vehicle. When providing the environmental monitoring data, the environment sensor unit may be also adapted to communicate with a navigation system arranged in the first vehicle. The driving environment information may comprise objects near to the vehicle, sun position, obstacles on the driving path etc. The objects and/or the obstacles may be, for instance a passenger vehicle, a truck, a (motor-)bike, a pedestrian, a tree, a lamppost, etc.

Furthermore, the environment sensor unit may be also adapted to generate operational information of the second vehicle, which travels next to, passes by or approaches towards the first vehicle. The operational information may comprise position, advancing direction, speed, size and type of the second vehicle.

The trajectory predicting unit may comprise at least one computing element and configured to receive the operational information of the second vehicle retrieved by the environment sensor unit. The trajectory predicting unit may be further configured to estimate a trajectory, in other words driving path of the second vehicle approaching the first vehicle based on the operational information of the second vehicle.

In an example, the environment sensor unit may be configured to generate driving environment information of the second vehicle. The trajectory predicting unit may be configured to predict the driving path of the second vehicle based on the operational information and the driving environment information of the second vehicle.

The control unit may be a part of an electronic control unit (ECU) adapted to assist a driving control system of the first vehicle. The control unit may be adapted to predict the perceived unsafe area, at which the user sitting in the first vehicle may feel unsafe due to the second vehicle approaching. Additionally, the perceived unsafe area may include an area, where the first vehicle and the second vehicle may be at risk of colliding. In other words, the perceived unsafe area may indicate that the first vehicle and the second vehicle threaten to crash. Thus, the perceived unsafe area may be also understood as a potential crash area.

The control unit may be configured to determine the perceived unsafe area based on the current position including the operational information of the first vehicle and the predicted trajectory of the second vehicle. In other words, the control unit may determine the perceived unsafe area assuming that the first vehicle keeps the same maneuver currently applied to the first vehicle on the currently predicted driving path. The perceived unsafe area may be initially determined empirically by monitoring a user's reaction such as accelerating, braking, laterally steering, etc. to the approaching vehicle.

In an example, the environment sensor unit may be configured to monitor free space around the first vehicle and the control unit may be configured to predict evolution of the free space of the first vehicle along the driving path predicted by the trajectory predicting unit based on the operational information of the second vehicle. The environment sensor unit may be also configured to monitor free space around the second vehicle, which can be used when predicting the trajectory of the second vehicle. In other words, the driving environment information may comprise free space information around the first vehicle and/or the second vehicle.

Furthermore, the environment sensor unit may monitor free space to predict the existence of other objects without (or with a lower confidence) classifying them as vehicles, pedestrians and so forth. The evolution of these objects can be predicted by the trajectory predicting unit based on the information provided by the environment sensor unit

In an example, the control unit is configured to determine an imaginal driving lane for the first vehicle for assessing the predicted driving path of the second vehicle. The imaginal driving lane may correspond to a current real lane, on which the first vehicle travels. Alternatively, the control unit may be also able to determine a virtual driving lane, in other words the imaginal driving lane to distinguish a current trajectory of the first vehicle from the predicted trajectory of the second vehicle.

The imaginal driving lane may serve as a reference when determining the perceived unsafe area between the first vehicle and the second vehicle. For instance, the control unit may be able to assess whether the second vehicle is expected to invade the imaginal driving lane towards the first vehicle. In an example, the perceived unsafe area may lie along the imaginal driving lane.

In an example, the control unit is configured to analyze a risk degree of the perceived unsafe area based on a relative distance between the predicted driving path of the second vehicle and the imaginal driving lane. The control unit may be adapted to specify the perceived unsafe area, which portion is more threatened by the approaching second vehicle than the remaining portion. The risk degree may indicate a probability of crossing the imaginal driving lane by the second vehicle, when the first vehicle maintains the current maneuver and the second vehicle follows the predicted driving path.

Such risk degree may be determined based on the relative distance between the predicted driving path of the second vehicle and the imaginal driving lane within the perceived unsafe area. For instance, if the relative distance is short, the risk degree may be higher than in the case, in which the relative distance is bigger. The risk degree may be represented by a finite number, for instance 1 to 3, or percentage.

The risk degree of the perceived unsafe area may be also determined based on further scenarios. For instance, the perceived unsafe area in the imaginal driving lane of the first vehicle may exist even though the predicted driving path of the second vehicle does not reach into the imaginal driving lane of the first vehicle. This may for example happen when an appearance or behavior of the second vehicle is identified as unsafe by the driver of the first vehicle. For example, the second vehicle is poorly loaded and may lose cargo, or the second vehicle is swirling around in an unsafe way as if its driver is drunk.

The perceived unsafe area may be also influenced by the driving environment of the second vehicle for example in low sun conditions where the driver of the second vehicle may be blinded by the low sun. Alternatively, the predicted driving path of the second vehicle is influenced by the traffic environment and traffic surrounding the second vehicle. For example, if there is a pedestrian or object in or near the lane of the second vehicle it can be expected to change path closer towards the imaginal lane of the first vehicle.

In an example, the control unit may be configured to classify the relative distance along a predetermined threshold range for analyzing the risk degree of the perceived unsafe area. When analyzing the risk degree of the perceived unsafe area, the control unit may be adapted to split the perceived unsafe area based on the relative distance between the predicted driving path of the second vehicle and the imaginal driving lane within the perceived unsafe area.

The threshold range may be understood as safety perception range for the user. In other words, the threshold range may be individually adjusted according to safety or danger perception of the user. Such user-specific threshold range may be set by the user. Alternatively or additionally, the control unit may be also able to determine the threshold range based on the user's reaction when the second vehicle approaches threateningly. The predetermined threshold range may be determined by a finite number, for instance 1 to 3, or percentage.

In an example, the risk degree of the perceived unsafe area may be determined by taking into account the rate of change of the relative distance between the predicted driving path of the second vehicle and the imaginal driving lane of the first vehicle in addition to the relative distance itself.

For example, there may be a perceived unsafe area along the imaginal driving lane of the first vehicle even though the predicted driving path of second vehicle is not yet determined to penetrate the driving lane of the first vehicle. However, the rapidly shrinking relative distance indicated by an absolute value may show that there is a large risk that soon the second vehicle's trajectory is expected to reach into the imaginal driving lane of the first vehicle and the situation can be therefore already perceived as unsafe.

In an example, the driving behavior monitoring system further comprises a display unit. The display unit is arrangeable in the first vehicle and configured to visualize the driving environment information of the vehicle. The control unit is configured to fuse the perceived unsafe area in the visualized driving environment information.

The display unit may be arranged inside the first vehicle, preferably in a driver's visual field, to facilitate a utilization of the display unit. The display unit may be a part of a human-machine interface system such as an infotainment system of the vehicle. The display unit may be integrated in a Center Stack Display (CSD), Head Up Display (HUD), Drivers Information Module (DIM) and/or Infotainment Head Unit (IHU).

The display unit may be configured to communicate with at least the environment sensor unit to visualize the driving environment information monitored by the environment sensor unit. The display unit may be adapted to display current traffic situation around the first vehicle, such as number of lanes, neighboring vehicles and/or obstacles.

The control unit may be further adapted to integrate the perceived unsafe area on the display unit visualizing the driving environment information, in other words the current traffic situation of the first vehicle. Accordingly, the user of the first vehicle may be able to recognize based on the displayed information on the display unit, whether the second vehicle is threatening such that any countermeasure is necessary or the second vehicle is harmless, thus the first vehicle may maintain the current maneuver.

In an example, the control unit is configured to visualize the risk degree of the perceived unsafe area on the display unit. The control unit may be adapted to fuse the determined risk degree in the perceived unsafe area displayed on the display unit. Accordingly, the user may be able to easily recognize the current traffic situation, particularly between the first vehicle and the second vehicle.

In an example, the control unit is configured to indicate the risk degree of the perceived unsafe area by a color gradient and/or a pattern gradient. The risk degree analyzed by classifying the relative distance along a predetermined threshold range may be represented by the color gradient, the pattern gradient or a mixture thereof in order to assist the user to better identify the risk degree.

In an example, the control unit is configured to update the predicted driving path of the second vehicle and the perceived unsafe area. The control unit may be able to adjust the predicted driving path of the second vehicle based on the operational information of the second vehicle received in real-time. Specifically, the second vehicle may be continuously monitored and tracked since it can potentially get close to the imaginal driving lane and cause the user of the first vehicle feel unsafe. Accordingly, the operational information of the second vehicle changed over time may be monitored in real time and the predicted driving path of the second vehicle may be adjusted correspondingly.

Further, the perceived unsafe area determined based on the current position and/or operational information of the first vehicle, which may also change over time, and the predicted driving path of the second vehicle may need to be adjusted as well. Hence, the control unit may be adapted to update the operational information, the predicted driving path of the second vehicle and/or the perceived unsafe area continuously or at a time period set by the user.

In an example, the control unit is configured to update at least the perceived unsafe area and the risk degree of the perceived unsafe area on the display unit. Since the predicted driving path of the second vehicle and the perceived unsafe area may be adjusted based on the change of the current position of the first vehicle and the operational information of the second vehicle, the control unit may be also adapted to update the risk degree of the perceived unsafe area correspondingly.

Further, the control unit may be also capable to update the visualization of the perceived unsafe area and the risk degree displayed on the display unit. Accordingly, the user may easily identify real-time traffic situation via the display. The control unit may be adapted to update the perceived unsafe area and the risk degree of the perceived unsafe area displayed on the display unit continuously or at a time period set by the user. Additionally, the control unit may be also capable to update the visualization of the current position and/or the driving environment information of the first vehicle on the display unit.

In an example, the environment sensor unit is configured to receive the operational information of the second vehicle from the second vehicle via wireless network element. The environment sensor unit environment sensor unit may be also able to receive the operational information of the second vehicle from roadside sensor units, other vehicles or drones, etc. Each of the first vehicle and the second vehicle may comprise at least one wireless network element such as LTE, 5G, Wi-Fi, Bluetooth, NFC, etc. enabling V2V (vehicle-to-vehicle), V2D (vehicle-to-device), V2I (vehicle-to-infrastructure) and/or V2X (vehicle to everything). Such communication may assist the environment sensor unit, particularly when the second vehicle is obstructed from the environment sensor unit of the first vehicle.

Accordingly, the environment sensor unit may be able to communicate with the second vehicle over the air and receive the operational information of the second vehicle. The environment sensor unit may be capable to compare the operational information of the second vehicle monitored by various sensors of the first vehicle with the operational information of the second vehicle provided by the second vehicle over the air. Further, the trajectory predicting unit may be able to apply suitable values for predicting the driving path of the second vehicle.

In an example, the control unit is configured to visualize the driving environment information of the first vehicle by means of an occupancy map or a high-definition map. The occupancy map may represent environment of the vehicle by means of a matrix grid with values representing an occupancy probability of the respective cell. The occupancy map may show static objects in the area ahead of the first vehicle and the occupancy map may be particularly used when estimating trajectories of the second vehicle. The high-definition map may refer to a highly accurate map with a 3D representation of real-time road network data, including lanes, road boundaries, objects, etc.

The control unit may be adapted to fuse the perceived unsafe area and the risk degree on such map displayed on the display unit, wherein the position of the first vehicle may be localized in the fused map. Accordingly, the user may receive accurate information of the current traffic situation around the first vehicle. Hence, the user's concern regarding a crash risk may be reduced or even eliminated.

In an example, the control unit is configured to communicate with a driving control means of the first vehicle to brake, accelerate or maneuver laterally the first vehicle. In particular, the control unit may identify that the risk degree is very high in view of the predetermined threshold range such that the user's perception on a risky situation may increase. Further, the second vehicle may seem to unavoidably cross the imaginal driving lane or approaches closer to the first vehicle. In such case, the control unit may be able to communicate with the driving control means determining and applying a driving maneuver to adjust current maneuver by braking accelerating or laterally steering the first vehicle to increase the safe feeling of the user.

In an example, the control unit is configured to apply machine learning to optimize determination of the perceived unsafe area and/or the risk degree of the perceived unsafe area. By automatically and iteratively adjusting and updating the information regarding the current position and the driving environment information of the first vehicle, the operational information of the second vehicle, the predicted driving path of the second vehicle, the perceived unsafe area and/or its risk degree, the control unit may be able to improve the determination of the perceived unsafe area between the first vehicle and the second vehicle and/or the user-specific risk degree of the perceived unsafe area.

Additionally, the control unit may be also configured to apply machine learning to optimize the determination of the perceived unsafe area and/or the risk degree of the perceived unsafe area by collecting and analyzing the countermeasure applied to the first vehicle.

According to the present disclosure, a vehicle is also presented. The vehicle comprises a driving behavior monitoring system as described above. The vehicle may comprise automated driving (AD) or advanced driver-assistance system (ADAS) functionalities assisting a user for propelling vehicle.

According to the present disclosure, a driving behavior monitoring method is also presented. The method comprises, but not necessarily in this order,
- generating driving environment information of a first vehicle,
- providing operational information of a second vehicle approaching the first vehicle to a trajectory predicting unit,
- predicting a driving path of the second vehicle based on at least the operational information of the second vehicle, and
- determining a perceived unsafe area based on a current position of the first vehicle and the predicted driving path of the second vehicle.

According to the present disclosure, a computer program element is also presented. The computer program element is configured for a driving behavior monitoring system as described above. The computer program element is adapted to perform the driving behavior monitoring method steps as described above, when executed by a processing element.

According to the present disclosure, one or more computer storage media may be presented. The computer storage media is encoded with instructions, that when executed by a computer, cause the computer to perform the operations of the respective method as described above.

The storage media may comprise internal to a computing device, such as a computer's SSD, or a removable device such as an external HDD or universal serial bus (USB) flash drive. There are also other types of storage media, including magnetic tape, compact discs (CDs) and non-volatile memory (NVM) cards.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically an example of a vehicle comprising a driving behavior monitoring system according to the present disclosure.
- Fig. 2a, 2b, 2c: show schematically examples, in which a user may perceive a risk of a crash.
- Fig. 3a, 3b, 3c, 3d: show schematically an example of a driving behavior monitoring method according to the present disclosure.
- Fig. 4: shows schematically an example of a driving behavior monitoring method according to the present disclosure.

### DESCRIPTION OF EXAMPLES

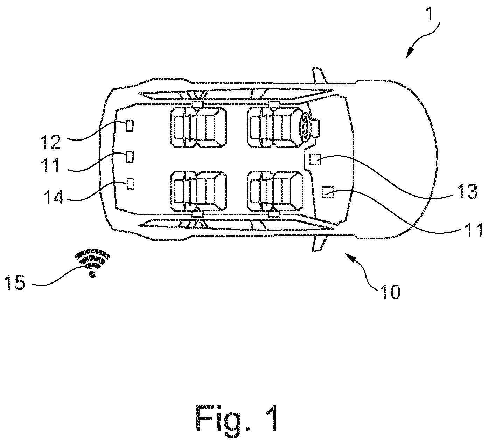

Fig. 1 shows a vehicle 1 comprising a driving behavior monitoring system 10. The vehicle 1 may comprise automated driving (AD) or advanced driver-assistance system (ADAS) functionalities assisting a user for propelling vehicle 1.

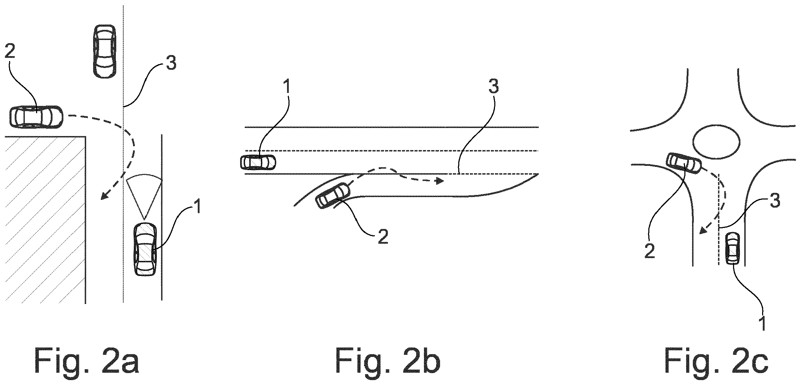

Fig. 2a to Fig. 2c show some scenarios, in which the user in an ego vehicle 1 may feel threatened by a second vehicle 2 approaching the ego vehicle 1. For instance, the second vehicle 2 turns with a big turning radios invading the lane 3 of the ego vehicle 1 (see Fig. 2a), the second vehicle 2 enters a highway with a coarse lateral control (see Fig. 2b) or the second vehicle 2 leaves a roundabout with a big turning radios (see Fig. 2c). However, such threatening situation for the user sitting in the ego vehicle 1 is not limited to the above-mentioned cases.

The driving behavior monitoring system 10 can increase user's confidence on safety of a dynamic driving task of the vehicle 1. The driving behavior monitoring system 10 comprises an environment sensor unit 11, a trajectory predicting unit 12, a display unit 13 and a control unit 14. The environment sensor unit 11 is arranged in the vehicle 1, which is a first and ego vehicle 1. The environment sensor unit 11 is configured to generate driving environment information of the first vehicle 1. The environment sensor unit 11 is also configured to provide operational information of a second vehicle 2 approaching the first vehicle 1 to the trajectory predicting unit 12.

The environment sensor unit 11 is also able to receive the operational information of the second vehicle 2 from the second vehicle 2 via wireless network element 15. Each of the first vehicle 1 and the second vehicle 2 may comprise at least one wireless network element 15 such as LTE, 5G, Wi-Fi, Bluetooth, NFC, etc. enabling V2V (vehicle-to-vehicle), V2D (vehicle-to-device), V2I (vehicle-to-infrastructure) and/or V2X (vehicle to everything).

The trajectory predicting unit 12 is configured to predict a driving path 5 of the second vehicle 2 based on the operational information of the second vehicle 2. The display unit 13 is arranged in the first vehicle 1 and configured to visualize the driving environment information of the first vehicle 1. The display unit 13 may be a part of a human-machine interface system such as an infotainment system of the first vehicle 1.

The control unit 14 is configured to determine a perceived unsafe area 4 based on a current position of the first vehicle 1 and the predicted driving path 5 of the second vehicle 2. The control unit 14 is further configured to fuse the perceived unsafe area 4 in the visualized driving environment information. Specifically, the control unit 14 is capable to apply machine learning to optimize determination of the perceived unsafe area 4 and/or the risk degree of the perceived unsafe area 4. The control unit 14 is further configured for determining an imaginal driving lane 3, analyzing a risk degree of the perceived unsafe area 4, indicating the risk degree of the perceived unsafe area 4, updating the predicted driving path 5 and the perceived unsafe area 4 and/or communicating with a driving control means for adjusting the current maneuver of the first vehicle 1.

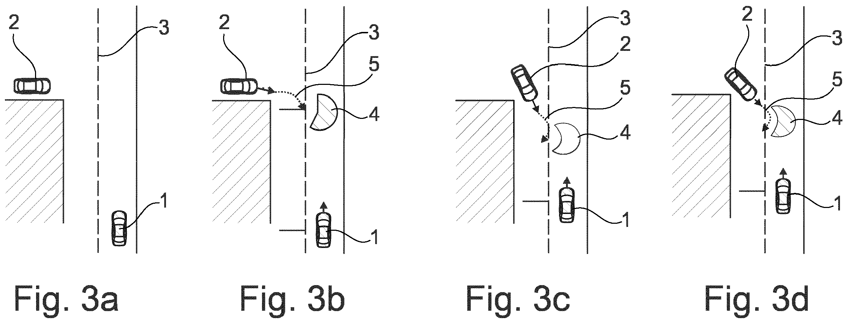

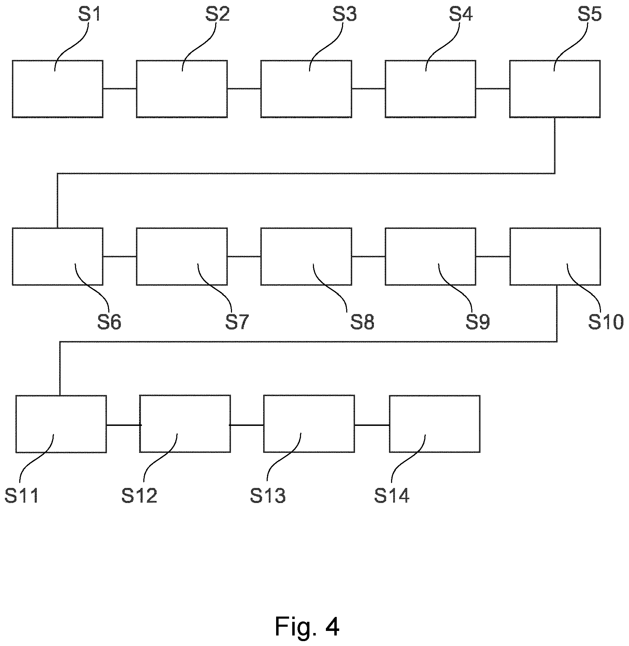

The driving behavior monitoring method can be performed as shown in Fig. 3a to Fig. 3d in combination with Fig. 4, but not necessarily in this order:

| | |
|---|---|
| S1: | identifying a second vehicle 2 approaching a first, ego vehicle 1 (see Fig. 3a); |
| S2: | generating driving environment information of the first vehicle 1; |
| S3: | providing operational information of the second vehicle 2 approaching the first vehicle 1 to a trajectory predicting unit 12; |
| S4: | predicting a driving path 5 of the second vehicle 2 based on the operational information of the second vehicle 2; |
| S5: | determining an imaginal driving lane 3 for the first vehicle 1 for assessing a driving path 5 of the second vehicle 2 predicted by a trajectory predicting unit 12; |
| S6: | determining a perceived unsafe area 4 based on a current position of a first vehicle 1 and the driving path 5 of the second vehicle 2; |
| S7: | visualizing driving environment information of the first vehicle 1 provided by an environment sensor unit 11 by means of an occupancy map or a high-definition map; |
| S8: | fusing the perceived unsafe area 4 in the visualized driving environment information; |
| S9: | analyzing a risk degree of the perceived unsafe area 4 based on a relative distance between the driving path 5 of the second vehicle 2 and the imaginal driving lane 3; |
| S10: | classifying the relative distance along a predetermined threshold range for analyzing the risk degree of the perceived unsafe area 4; |
| S11: | indicating the risk degree of the perceived unsafe area 4 by a color gradient and/or a pattern gradient (see Fig. 3b); |
| S12: | updating the predicted driving path 5 of the second vehicle 2 and the perceived unsafe area 4 (see Fig. 3c); |
| S13: | updating at least the perceived unsafe area 4 and the risk degree of the perceived unsafe area 4 on the display unit 13 (see Fig. 3d); |
| S14: | communicating with a driving control means of the first vehicle 1, in case of a highest risk degree. |

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A driving behavior monitoring system (10) for a vehicle (1), the driving behavior monitoring system (10) comprising,
- an environment sensor unit (11),
- a trajectory predicting unit (12), and
- a control unit (14),
the environment sensor unit (11), the trajectory predicting unit (12) and the control unit (14) being arrangeable in a first vehicle (1),
the environment sensor unit (11) being configured to generate driving environment information of the first vehicle (1),
the environment sensor unit (11) being configured to provide operational information of a second vehicle (2) approaching the first vehicle (1) to the trajectory predicting unit (12),
the trajectory predicting unit (12) being configured to predict a driving path (5) of the second vehicle (2) based on at least the operational information of the second vehicle (2), and
the control unit (14) being configured to determine a perceived unsafe area (4) based on a current position of the first vehicle (1) and the predicted driving path (5) of the second vehicle (2).

2. The driving behavior monitoring system (10) according to claim 1, the control unit (14) being configured to determine an imaginal driving lane (3) for the first vehicle (1) for assessing the driving path (5) of the second vehicle (2).

3. The driving behavior monitoring system (10) according to the preceding claim, the control unit (14) being configured to analyze a risk degree of the perceived unsafe area (4) based on a relative distance between the driving path (5) of the second vehicle (2) and the imaginal driving lane (3).

4. The driving behavior monitoring system (10) according to any of the preceding claims, further comprising a display unit (13), the display unit being arrangeable in the first vehicle (1) and configured to visualize the driving environment information of the first vehicle (1), the control unit (14) being configured to fuse the perceived unsafe area (4) in the visualized driving environment information.

5. The driving behavior monitoring system (10) according to claim 3 or 4, the control unit (14) being configured to visualize the risk degree of the perceived unsafe area (4) on the display unit (13).

6. The driving behavior monitoring system (10) according to the preceding claim, the control unit (14) being configured to indicate the risk degree of the perceived unsafe area (4) by a color gradient and/or a pattern gradient.

7. The driving behavior monitoring system (10) according to any of the preceding claims, the control unit (14) being configured to update the predicted driving path (5) of the second vehicle (2) and the perceived unsafe area (4).

8. The driving behavior monitoring system (10) according to the preceding claim, the control unit (14) being configured to update at least the perceived unsafe area (4) and the risk degree of the perceived unsafe area (4) on the display unit (13).

9. The driving behavior monitoring system (10) according to claim 1, the environment sensor unit (11) being configured to receive operational information of the second vehicle (2) from the second vehicle (2) via wireless network element (15).

10. The driving behavior monitoring system (10) according to the preceding claim, the control unit (14) being configured to visualize the driving environment information of the first vehicle (1) by means of an occupancy map or a high-definition map.

11. The driving behavior monitoring system (10) according to any of the preceding claims, the control unit (14) being configured to communicate with a driving control means of the first vehicle (1) to brake, accelerate or maneuver laterally the first vehicle (1).

12. The driving behavior monitoring system (10) according to any of the preceding claims, the control unit (14) being configured to apply machine learning to optimize determination of the perceived unsafe area (4) and/or the risk degree of the perceived unsafe area (4).

13. A vehicle (1), the vehicle comprising a driving behavior monitoring system (10) according to any of the preceding claims 1 to 12.

14. A driving behavior monitoring method, the method comprising,
- generating (S2) driving environment information of a first vehicle (1),
- providing (S3) operational information of a second vehicle (2) approaching the first vehicle (1) to a trajectory predicting unit (12),
- predicting (S4) a driving path (5) of the second vehicle (2) based on at least the operational information of the second vehicle (2), and
- determining (S6) a perceived unsafe area (4) based on a current position of the first vehicle (1) and the predicted driving path (5) of the second vehicle (2).

15. A computer program element for a driving behavior monitoring system (10) according to any of the preceding claims 1 to 12, which, when being executed by a processing element, is adapted to perform the method steps according to claim 14.
